# EUROPEAN PATENT APPLICATION

(11) **EP 2 017 871 A2**
(43) Date of publication of application: **21.01.2009**
(21) Application number: 08160572.7
(22) Date of filing: 16.07.2008
(51) Int. Cl.: H01H 71/12, H02H 3/00, H01H 71/74

(54) **Apparatus and method for fault current interruption**

(30) Priority: 17.07.2007 US 778793
(71) Applicant: GENERAL ELECTRIC COMPANY, Schenectady, NY 12345 (US)
(72) Inventor: Rivers, Jr., Cecil, Hartford, CT 06114 (US); Caggiano, Robert J., Wolcott, CT 06716 (US)
(74) Representative: Illingworth-Law, William Illingworth

(57) **Abstract**

A circuit interrupter method for interrupting a flow of current, including: providing a controller 16 for determining the presence of predetermined current in the circuit, the predetermined current value stored in the controller 16; providing a circuit breaker 20 comprising a trip mechanism for receiving trip signal, a current transformer 22 for providing output proportional to predetermined current in the circuit, a switch 23 for interrupting the flow of current in the circuit, a control input for receipt of an operating signal by the trip mechanism, and proximate and distal connectors connecting the circuit breaker 20 to a source and a circuit, respectively; determining, by the controller 16, the presence of a current in the circuit; receiving a trip signal at the circuit breaker 20 from the controller 16, and interrupting the flow of current in the circuit, when the current in the circuit is determined by the controller 16 to be a predetermined current.

## Description

### BACKGROUND OF THE INVENTION

Field of the Invention

The present disclosure is related to alternating current (AC) electrical systems. More particularly, the present disclosure is related to fault current interrupters and methods.

Description of Related Art

The electrical systems in residential, commercial, and industrial applications usually include a panel board for receiving electrical power from a utility source. The power is routed through the panel board to one or more current interrupters such as, but not limited to circuit breakers, trip units, and others.

Power is distributed to a designated branch, where each branch supplies one or more loads with the power. Each of the branches initiates at a current interrupter. The current interrupters are configured to interrupt the power to the particular branch if certain power conditions in that branch reach predetermined criteria.

For example, some current interrupters can interrupt power due to a ground fault, and are commonly known as ground fault current interrupters (GFCls). The ground fault condition results when an imbalance of current flows between a line conductor and a neutral conductor, which could be caused by a leakage current or an arcing fault to ground.

Other current interrupters can interrupt power due to an arcing fault, and are commonly known as arc fault current interrupters (AFCIs). Arcing faults are commonly defined into two main categories, series arcs and parallel arcs. Series arcs can occur, for example, when current passes across a gap in a single conductor. Parallel arcs can occur, for example, when current passes between two conductors. Arcing faults, particularly series arc faults, may not cause a conventional circuit interrupter to trip. The potential for occurrence of arcing faults increases as electric circuit or line wiring become older and the insulation breaks down so that when suitable conditions occur arcing between circuits is a greater possibility.

Other current interrupters can interrupt power due to an over current, and are commonly known as over current devices, which, for example, interrupt power when a current above predetermined criteria is detected. Over current devices help to prevent valuable circuitry and wiring from damage due to application of power beyond rating of the circuitry etc.

Still, other current interrupters can interrupt power in a situation wherein power beyond predetermined criteria is applied within a predetermined period of time, which typically is very small, such as a portion of a cycle. These current interrupters are known as instantaneous trip devices and are designed to protect against sudden short circuits.

Over current and instantaneous trip features are present in typical circuit interrupter devices i.e. circuit breakers. The devices may also include ground current interruption. Over current and instantaneous circuit interruption in a typical circuit breaker is provide via the inherent qualities of the material with which the breaker is constructed. Arc fault current interruption (AFCI) is not an inherent feature of conventional thermal magnetic breaker. However, AFCI is a safety requirement set out by various standard authorities such as, for example, UL and NEC. Ground fault current interruption (GFCI) is also not an inherent feature of conventional thermal magnetic breakers and like AFCI, is also being specified as a safety requirement in, for example, residential new construction.

The above-mentioned current interrupters are typically designed to meet safety standards such as UL and NEC. Such standards change over the course of time. Therefore, a current interrupter installed and meeting a present safety standard cannot be ensured to meet a future safety standard. The current interrupter would need to be replaced with a newer current interrupter that meets new safety standards in order to be brought to code. This type of replacement is costly, labor intensive and interrupts service to those circuits connected to the current interrupters.

Accordingly, it has been determined by the present disclosure that there is a continuing need for current interrupters for which safety standards can be updated and a need for current interrupter methods for providing current interrupters meeting updated safety standards in AC electrical systems that overcome, alleviate, and/or mitigate one or more of the aforementioned and other deleterious effects of prior art systems.

Accordingly, there is a need for fault current interruption that overcomes, alleviates, and/or mitigates one or more of the aforementioned and other deleterious effects of prior art fault current interruption.

### BRIEF SUMMARY OF THE INVENTION

A circuit interrupter apparatus and method is provided that can be updated more easily in order to accommodate changes in standards such as safety standards, electric codes and municipality adopted building codes. The controller of the apparatus can determine fault current based upon predetermined fault current magnitudes provided to the controller and upgradeable or changeable. Various fault currents such as arc fault, ground fault, over current and instantaneous fault currents can be detected and the circuit breaker(s) for the line(s) on which the fault current is detected can be tripped by a trip signal initiated from the controller.

An exemplary circuit interrupter apparatus of the present invention for interrupting the flow of current in a circuit includes a controller for determining the presence of at least one predetermined current in the circuit, the at least one predetermined current stored in the controller; a circuit breaker comprising a trip mechanism for receiving a trip signal, a current transformer sensor for providing an output proportional to a current in the circuit, a switch for interrupting the flow of current in the circuit, a control input for receipt of a operating signal, and proximate and distal circuit connectors connecting the circuit breaker to a power source and the circuit, respectively; wherein the at least one circuit breaker connected at a first connection to the controller provides output proportional to the current in the circuit; the at least one circuit breaker connected at a second connection to obtain the operating signal from the controller; and the at a third and fourth connection wherein the at least one circuit breaker connected to the power source at the third connector proximate the power source and connected to the circuit at the fourth connector distal to the power source.

An exemplary method of the present invention provides for interrupting the flow of current in at least one circuit, the method includes: providing a controller for determining the presence of at least one predetermined current in the at least one circuit, the at least one predetermined current stored in the controller; providing a circuit breaker comprising a trip mechanism for receiving a trip signal, a current transformer sensor for providing an output proportional to a current in the at least one circuit, a switch for interrupting the flow of current in the at least one circuit, a control input for receipt of a operating signal by the trip mechanism from the controller, and proximate and distal circuit connectors connecting the circuit breaker to a power source and the at least one circuit, respectively; determining, by the controller, the presence of at least one predetermined current in the at least one circuit; receiving a trip signal at the trip mechanism of the circuit breaker from the controller, and interrupting the flow of current in the circuit by using a switch, when the current in the at least one circuit is determined by the controller to be a predetermined current.

Another exemplary embodiment of the present invention includes a computer program product comprising: a program storage device readable by a circuit interrupter, tangibly embodying a program of instructions executable by the circuit interrupter to perform a method for interrupting the flow of current in at least one circuit, the method includes: providing a controller for determining the presence of at least one predetermined current in the at least one circuit, the at least one predetermined current stored in the controller; providing a circuit breaker comprising a trip mechanism for receiving a trip signal, a current transformer sensor for providing an output proportional to a current in the at least one circuit, a switch for interrupting the flow of current in the at least one circuit, a control input for receipt of a operating signal by the trip mechanism from the controller, and proximate and distal circuit connectors connecting the circuit breaker to a power source and the at least one circuit, respectively; determining, by the controller, the presence of at least one predetermined current in the at least one circuit; receiving a trip signal at the trip mechanism of the circuit breaker from the controller, and interrupting the flow of current in the circuit by using a switch, when the current in the at least one circuit is determined by the controller to be a predetermined current.

The above brief description sets forth rather broadly the more important features of the present invention in order that the detailed description thereof that follows may be better understood, and in order that the present contributions to the art may be better appreciated. There are, of course, additional features of the invention that will be described hereinafter and which will be for the subject matter of the claims appended hereto.

In this respect, before explaining several embodiments of the invention in detail, it is understood that the invention is not limited in its application to the details of the construction and to the arrangements of the components set forth in the following description or illustrated in the drawings. The invention is capable of other embodiments and of being practiced and carried out in various ways. Also, it is to be understood, that the phraseology and terminology employed herein are for the purpose of description and should not be regarded as limiting.

As such, those skilled in the art will appreciate that the conception, upon which disclosure is based, may readily be utilized as a basis for designing other structures, methods, and systems for carrying out the several purposes of the present invention. It is important, therefore, that the claims be regarded as including such equivalent constructions insofar as they do not depart from the spirit and scope of the present invention.

Further, the purpose of the foregoing Abstract is to enable the U.S. Patent and Trademark Office and the public generally, and especially the scientists, engineers and practitioners in the art who are not familiar with patent or legal terms or phraseology, to determine quickly from a cursory inspection the nature and essence of the technical disclosure of the application. Accordingly, the Abstract is neither intended to define the invention or the application, which only is measured by the claims, nor is it intended to be limiting as to the scope of the invention in any way.

Further, the purpose of the foregoing Paragraph Titles used in both the background and the detailed description is to enable the Patent Office and the public generally, and especially the scientists, engineers and practitioners in the art who are not familiar with patent or legal terms or phraseology, to determine quickly from a cursory inspection the nature and essence of the technical disclosure of the application. Accordingly, the Paragraph Titles are neither intended to define the invention or the application, which only is measured by the claims, nor are they it intended to be limiting as to the scope of the invention in any way.

The above-described and other features and advantages of the present disclosure will be appreciated and understood by those skilled in the art from the following detailed description of embodiments provided by way of example only, drawings, and appended claims.

### BRIEF DESCRIPTION OF THE SEVERAL VIEWS OF THE DRAWINGS

**FIG. 1** is a functional block diagram of an exemplary embodiment of a fault current interrupter according to the present disclosure;

**FIG, 1A** illustrates an exploded view of the circuit breaker connections to the controller and the line.

**FIG. 2** is a flow chart of an exemplary embodiment of the present invention for determining the presence of a fault condition on a circuit;

**FIG. 3** is a functional block diagram of another exemplary embodiment of a fault current interrupter according to the present disclosure;

**FIG. 4** is a functional block diagram of yet another exemplary embodiment of a fault current interrupter according to the present disclosure;

**FIG. 5** is a flow chart of another exemplary embodiment of the present invention for determining the presence of a fault condition on a circuit;

**FIG. 6** illustrates examples of various circuit interrupter switches that can be used in various embodiments of the present invention;

**FIG. 7** illustrates a functional block diagram of an exemplary power distribution panel of an embodiment the present invention including circuit interrupters and a controller;

### DETAILED DESCRIPTION OF THE INVENTION

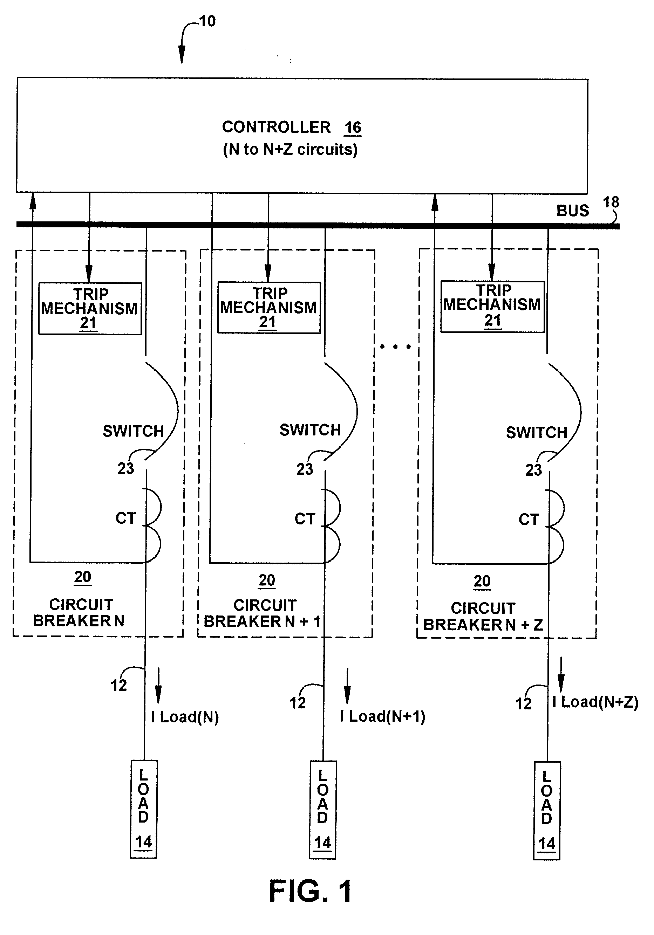

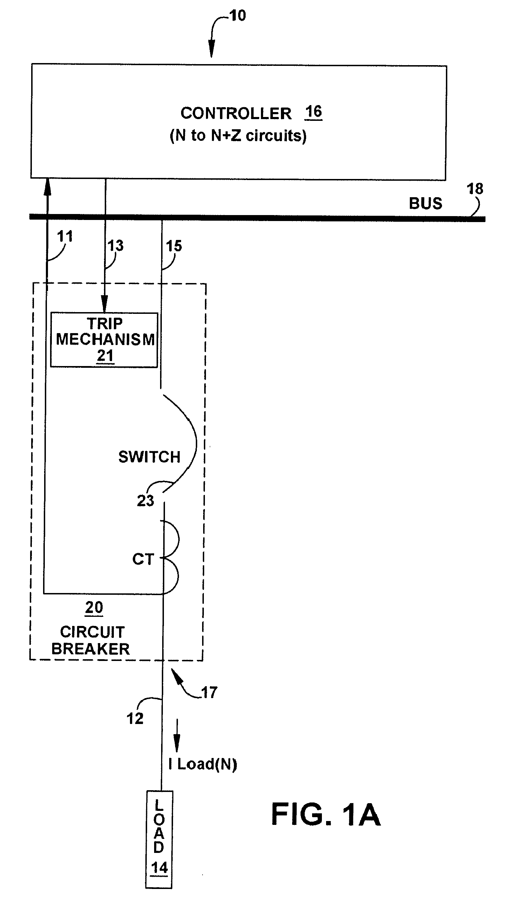

Referring to the drawings and in particular to **FIG. 1**, a functional block diagram of an exemplary embodiment of an apparatus 10 of the present invention for fault current interruption according to the description herein. **FIG. 1** illustrates several electrical circuits or lines 12, each with a load current *i_{load}*. Each line provides electric power to a corresponding load 14. The embodiment further comprises a controller 16 connected to each of the circuit breakers 20. Each circuit breaker comprises, for example, a trip mechanism 21, a current transformer with sensor (CT) 22, and a switch 23. The sensor can be a current transformer sensor or other current sensing device as may be determined by one of ordinary skill in the art. The controller 16 is configured to provide control signal to the trip mechanism 21 of each of the circuit breakers 20 wherein by signaling to trip an appropriate circuit breaker 20, switch 23 is opened (or tripped) thereby disconnecting the load 14, associated with the circuit or line 12, from power source, AC bus 18. In making the trip decision, the controller 16 determines whether a fault condition is present using, for example, predetermined current values. The fault condition could be an arc fault current, a ground fault current, an over current or an instantaneous over current as discussed above. The currents values are obtained through the use of a current transformer 22 that provides a secondary current proportional to the load current *i_{load}*. The current transformer 22 has primary windings positioned such that the load current *i_{load}*, or current transformer primary current, induces a secondary current that is the output current of current transformer 22. This output current of current transformer 22 is used by the controller 16 to make decisions regarding whether a fault is present on line 12 and/or load 14.

In labeling to the circuits and various elements in various exemplary illustrations of the present invention, such as in **FIGS. 1****,** **3** and **4**, the nomenclature, n through n+z is used. For purpose of simplicity, when describing the figures, the n through n+z status of a circuit and corresponding elements are not referenced. The designations n through n+z are made to illustrate that the number of circuits or lines 12 that can be signaled to trip using controller 16, in the exemplary apparatus illustrated and described herein. The number of circuits or lines 12 that can be connected to the controller are limited to n+z, (i.e. n, n+1, n+2, n+3 ... n+z), for the controller presented in the embodiments described herein. One of ordinary skill in the art can make a determination as to a number of circuits (i.e. n+z) that can be configured with the apparatus 10, such as exemplary apparatus 10 of **FIG. 1**, of the present invention. The numbers of circuits configured with the apparatus can be determined by considering factors such as total number of branch circuits.

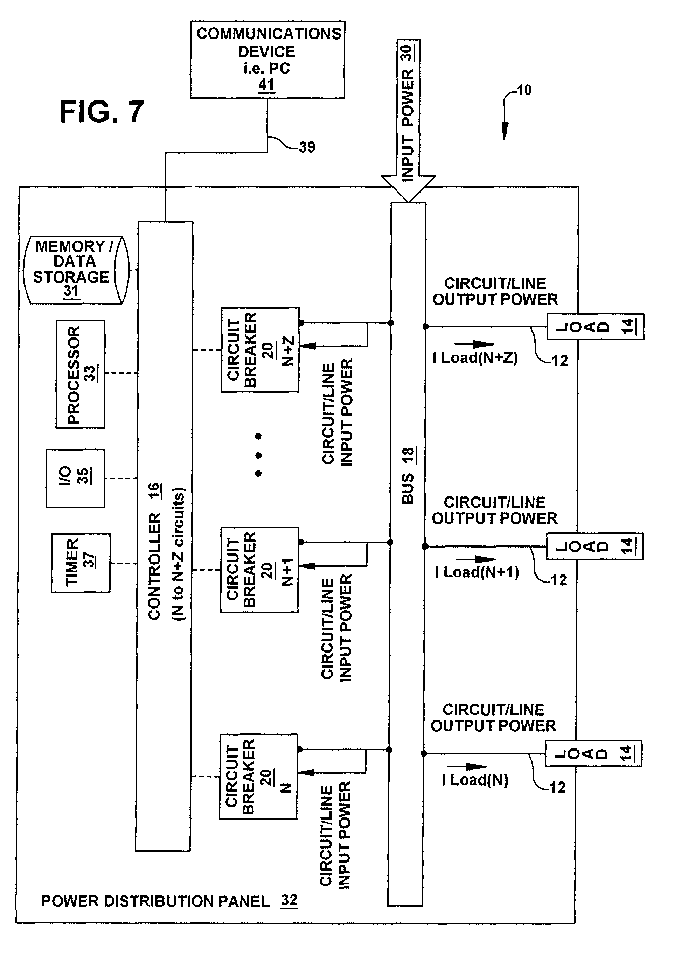

Referring again to **FIG. 1**, it is noted that the bus, or AC bus 18 is supplied by an AC power source 30 (shown in **FIG. 7**). The exemplary circuit breaker 20 of **FIG. 1** and the other embodiments described herein is connected to the controller 16 and line 12 via several connections illustrated in an exploded view of **FIG, 1A**. The circuit breaker 20 is connected at a first connection 11 to the controller 16 to provide output proportional to the current in the circuit 12, at a second connection 13 the circuit breaker 20 obtains operating signal from the controller 16, at third and fourth connections the circuit breaker 20 is connected to the power source 18 at the third connector 15 proximate the power source and to the circuit 12 at the fourth connector 17 distal to the power source.

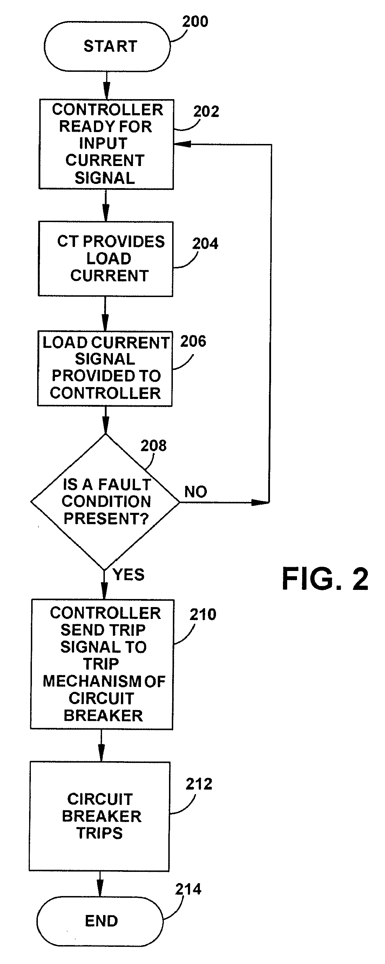

Turning to **FIG. 2**, which illustrates a flowchart of an embodiment of the method of the present invention, the flowchart corresponds to the exemplary apparatus embodiment of **FIG. 1**. At operator 200, the method begins. Next, operator 202 indicates that the controller is ready for input signal. Next at operator 204, load current *i_{load}* is obtained using current transformer 22 and provided to the controller 16 at operator 206, via an output from the current transformer 22 to an input (not shown) at controller 16.

Continuing with the flowchart of **FIG. 2**, at operator 208 a query is made as to whether a fault condition is present. The fault condition could be an arc fault current, a ground fault current, an over current or an instantaneous over current as discussed above. It should be noted that the processor 16 can be, for example, a microprocessor or ASIC (application specific integrated circuit).

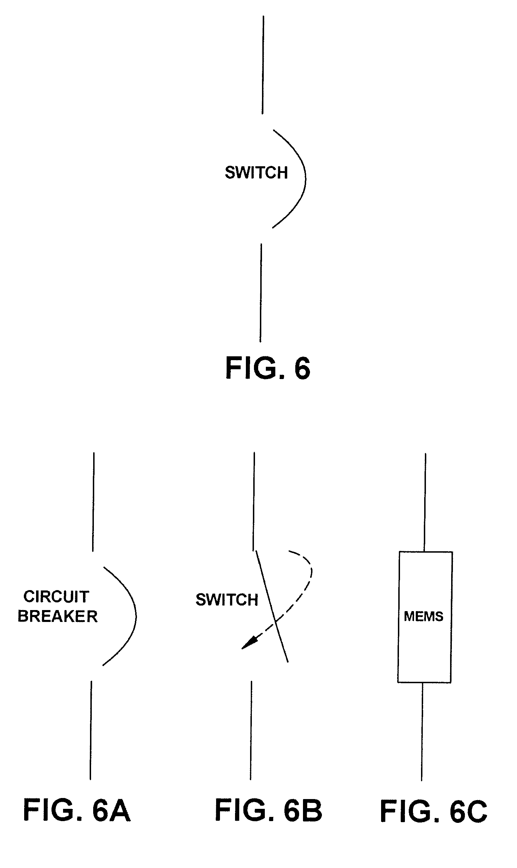

Returning to the query of operator 208, if the answer to the query of operator 208 is YES, then the method proceeds to operator 210 and the controller 16 sends a trip signal to circuit breaker 20. Next, at operator 212, the circuit breaker 20 trips. The switch 23, further illustrated in **FIGS. 6, 6A, 6B and 6C** can be a typical circuit breaker of **FIG. 6A****;** a typical single pole switch, of **FIG. 6B** comprising one-blade, on-and-off switch; or a MEMS (micro-electromechanical system based) switch. Other suitable switches can be determined by one of ordinary skill in the art. When choosing an appropriate switch, factors such as material content of the switch, power rating and ampere rating are considered.

Trip or opening of the switch 22 of circuit breaker 20, at operator 212, is performed to disconnect the load 14 from the power source, bus 18. The disconnect of the source 20 from load 14 stops *i_{load}* from flowing, and feeding the fault; When the trip determination is made, *i_{load}* is a current of competent value to indicate a fault condition. Following operator 212, the method ends at terminator 214.

Returning to operator 208, if the answer to the query of operator 208 is NO, then a fault condition is not present and there is a return to operator 202. Operator 202 is followed by the operators previously described herein to follow operator 202. The controller 16 is ready for a load current signal and the load current signal is provided at operator 204. Operator 204 is followed by the operators previously described herein to follow operator 204.

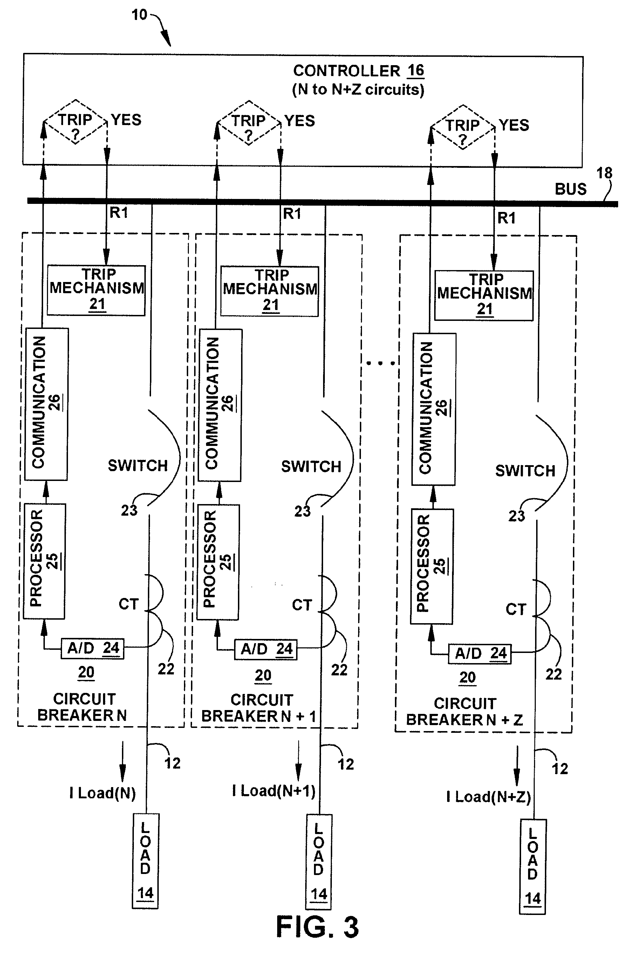

**FIG. 3****,** which illustrates another embodiment of the apparatus of the present invention. Again, the designations n through n+z are used in the illustration. Since these designations are addressed above, they are not used in the written description of **FIG. 3****.**

**FIG. 3** is a functional block diagram of another exemplary embodiment of apparatus 10 of the present invention for fault current interruption according to the description herein. **FIG. 3** illustrates several electrical circuits or lines 12, each with a load current *i_{load}*. Each line provides electric power to a corresponding load 14. The embodiment further comprises a controller 16 connected to the circuit breaker 20. Each circuit breaker 20 comprises, for example, trip mechanism 21, current transformer 22 (explained above), switch 23, and analog to digital converter 24 for converting the current transformer 22 current to a digital format.

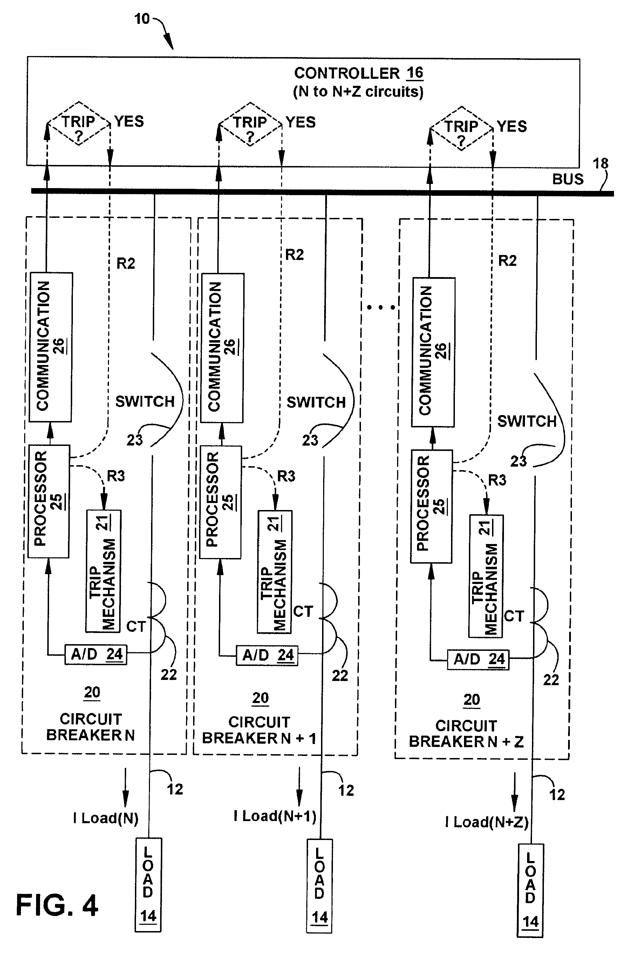

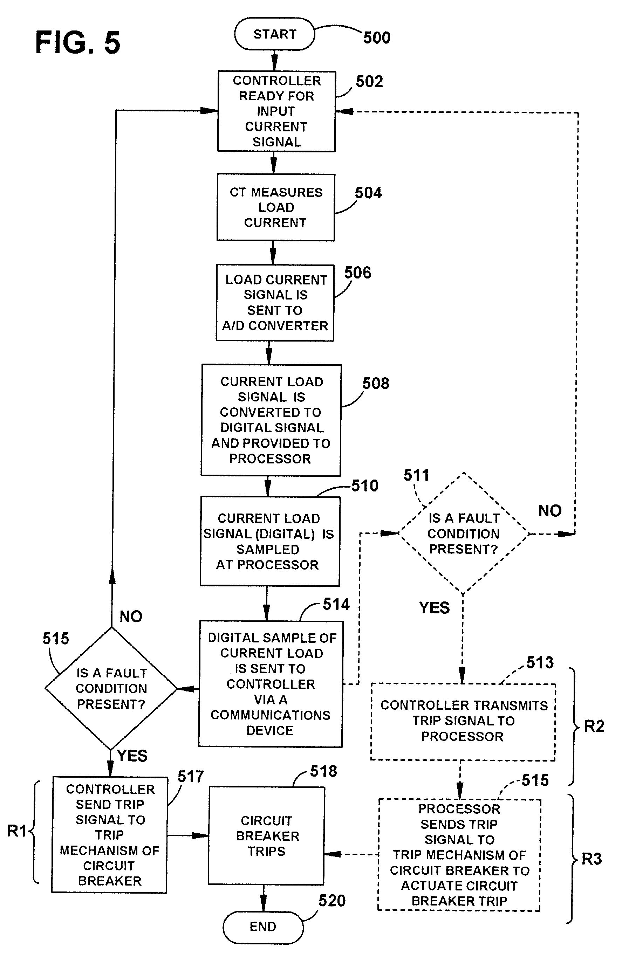

The circuit breaker 20, of the exemplary embodiment of **FIG. 3**, further comprises a processor 25 that performs current sampling, and a communications device 26 illustrating connection of the current sample output of the processor 25 to the controller 16, at an appropriate input to the controller 16. The controller 16 is configured to send control signal via route **R1** for signal from the controller 16 to the trip mechanism 21 of the circuit breaker 20 wherein by signaling to trip circuit breaker 20, switch 23 is opened or tripped thereby disconnecting the load 14, associated with the circuit or line 12, from power source, AC bus 18. In making the trip decision, the controller 16 determines whether a fault condition is present using, for example, predetermined current values. As noted previously, the fault condition could be for example, but not limited to, an arc fault current, a ground fault current, an over current or an instantaneous over current as discussed above. Thus in the function block diagram of **FIG. 3****,** note that solid line **R1** illustrates aspects of the embodiment of the flowchart of **FIG. 5****.** The solid line **R1** illustrates a route for signal from controller 16 to trip mechanism 21. This differs from the alternate embodiment of **FIG. 4** explained below.

An alternate embodiment of the apparatus of **FIG. 3** is illustrated in **FIG. 4** wherein the circuit breaker 20 comprises for example, a trip mechanism 21, a current transformer 22, a switch 23, and an analog to digital converter 24 for converting the current transformer 22 output or secondary current to a digital signal. The circuit breaker 20, of the exemplary embodiment of FIG. 3, further comprises a processor 25 that performs current sampling of the digital signal, and a communications device 26 for providing the current sample output of the processor 25 to the controller 16, at an appropriate input to the controller 16.

In the alternate embodiment of **FIG. 4**, the controller 16 is configured to provide control signal to the processor 25 of the circuit breaker 20 wherein the controller 16 signals the appropriate processor 25 to fire the trip mechanism 21 of the circuit breaker 20, as is illustrated with dashed lines from the controller 16 to the processor 25 and to the trip mechanism 21. When the trip mechanism 21 fires, the associated switch 23 is opened (or tripped) thereby disconnecting the load 14, associated with the circuit or line 12, from power source, AC bus 18. In making the trip decision, the controller 16 determines whether a fault condition is present using, for example, predetermined current values. As noted previously, the fault condition could be an arc fault current, a ground fault current, an over current or an instantaneous over current as discussed above.

In summary, for the embodiments of **FIGS. 3** **and** **4**, the processor 25 transmits the sampled current via a communication device 26 to the centralized controller 16. The centralized controller 16 determines if it should trip the breaker 20 in the apparatus 10 whose current sensing device, or current transformer 22 provides a current that indicates a fault condition is present on the line 12. The embodiments differ in the steps that follow the indication of a fault condition. In the embodiment of FIG. 3, if the circuit breaker 20 is tripped, the controller 16 transmits a trip signal to the appropriate breaker's trip mechanism 21. In the embodiment of FIG. 4, if the circuit breaker 20 is tripped, the controller 16 transmits a trip signal to the appropriate processor 25 associated with breaker 20, which will signal the trip mechanism 21 to trip or open the switch 23. The differing configuration of FIG. 3 is illustrated with dashed lines connecting the controller 16 to processor 25, and processor 25 to trip mechanism 21.

Turning to **FIG. 5**, which illustrates a flowchart of another exemplary embodiment of the method of the present invention, the flowchart of **FIG. 5** corresponds to the exemplary apparatus embodiment of **FIGS. 3** **and** **4****.** At operator 500, the method begins. Next, operator 502 indicates that the controller is ready for input signal. Next at operator 504, load current *i_{load}* is obtained from output of current transformer 22. At operator 506 *i_{load}* and provided to analog to digital or A/D converter 24. Next, at operator 508, the load current signal is converted to a digital signal using A/D converter 24, and the digital signal is provided to processor 25. At operator 510 digital current load signal is sampled at processor. At operator 514 the digital sample of current load is sent to controller 16 via a communications device 36.

Continuing with the flowchart of **FIG. 5**, at operator 515 a query is made as to whether a fault condition is present. The digital current data is processed at controller 16 to determine if a fault condition exists. The fault condition could be an arc fault current, a ground fault current, an over current or an instantaneous over current as discussed above. It should be noted that the processor 16 can be, for example, a microprocessor or ASIC (application specific integrated circuit).

Returning to the query of operator 515, if the answer to the query of operator 515 is YES, then the flowchart proceeds to operator 517 and the controller 16 sends a trip signal to trip mechanism 21 of circuit breaker 20. Next, at operator 518, the circuit breaker 20 trips. The switch 22 can be for example the switch illustrated in FIGS. **FIGS. 6, 6A, 6B and 6C**, described above. Other suitable switches, also discussed above, can be determined by one of ordinary skill in the art.

Trip or opening of the switch 22 of circuit breaker 20, at operator 518, is performed to disconnect the load 14 from the power source, AC bus 18. The disconnect of the source 20 from load 14 stops *i_{load}* from flowing, and feeding the fault; When the trip determination is made, *i_{load}* is a current of competent value to indicate a fault condition. Following operator 517, the method ends at terminator 520.

Returning to operator 515, if the answer to the query of operator 515 is NO, then a fault condition is not present and there is a return to operator 502. Operator 502 is followed by the operators previously described herein to follow operator 502. The controller 16 is ready for a load current signal at operator 502, and the load current signal is provided at operator 504. Operator 504 is followed by the operators previously described herein to follow operator 504.

Trip or opening of the switch 22 of circuit breaker 20, at operator 518, is performed to disconnect the load 14 from the power source, for example residential 120V AC bus 18. The disconnect of the source 20 from load 14 stops *i_{load}* from flowing, and feeding the fault; When the trip determination is made, *i_{load}* is a current of competent value to indicate a fault condition. Following operator 518, the method ends at terminator 520.

In an alternate embodiment corresponding to the functional block diagram of **FIG. 4** and further illustrated with dashed lines in the flowchart of **FIG. 5**, the presence of fault conditions is managed differently than in the embodiment corresponding to the functional block diagram of **FIG. 3****.** The difference being that after operator 514, and a query of operator 511 (substantially similar to the query of operator 515 but illustrated as separate operators for ease of description), the controller 16 directs the trip signal differently. At operator 511 a query is made as to whether a fault condition is present. The digital current signal is processed at controller 16 to determine if a fault condition exists. Thus in the function block diagram of **FIG. 4**, note that dashed lines illustrate aspects of the alternate embodiment of the flowchart of **FIG. 5**. The dashed lines illustrate a route **R2** for signal from controller 16 to processor 25 and another route **R3** for signal from processor 25 to trip mechanism 21. Note that routes **R1, R2** and **R3** of the embodiments of **FIGS. 3** **and** **4** are also substantially shown using brackets adjacent to operators 517, 513 and 515 in **FIG. 5****.**

If the answer to the query of operator 515 is NO, then a fault condition is not present and there is a return to operator 502. Operator 502 is followed by the operators previously described herein to follow operator 502. The controller 16 is ready for a load current signal at operator 502, and the load current signal is provided at operator 504. Operator 504 is followed by the operators previously described herein to follow operator 504.

Returning to operator 511, if the answer to the query of operator 515 is YES, then the flowchart proceeds to operator 513 and the controller 16 sends a trip signal to processor 25. Next at operator 515, the processor 25 sends trip signal to trip mechanism 21 of circuit breaker 20 to actuate the circuit breaker 20 trip.

Next, at operator 518, the circuit breaker 20 trips. Trip or opening of the switch 22 of circuit breaker 20, at operator 518, is performed to disconnect the load 14 from the power source, for example residential 120V AC bus 18. The disconnect of the source 20 from load 14 stops *i_{load}* from flowing, and feeding the fault; When the trip determination is made, *i_{load}* is a current of competent value to indicate a fault condition. Following operator 518, the method ends at terminator 520.

**FIG. 7** illustrates a functional block diagram of an exemplary embodiment the apparatus 10 present invention configured in a power distribution panel 32 and comprising a controller 16 and circuit interrupters 20 connected to circuits or lines 12 with load 14. As explained previously, the quantity of N through N+Z circuit breakers is a factor of the capacity of the controller 16 and other factors discussed previously.

The functional block diagram further comprises the AC power source 30 connected to AC bus 18. Each circuit breaker 20 also receives an input of proportional load current signal. The load current signal is typically obtained through the use of current transformers 22 configured such that the primary current is *i_{load}* and the secondary current is a stepped down current substantially proportional to *i_{load}* and of a current in magnitude compatible with the controller 16 and/or other components connected thereto. Each circuit or line 12 feeding load 14 connects to the AC Bus 18, and to circuit breaker 20 which is configured to trip the circuit 12 if load current *i_{load}* is a competent value to indicate a fault condition.

The exemplary apparatus 10 of the present invention, as configured in FIG. 7, further comprises various components interconnected with controller 16. These components can be included in alternate embodiments of the apparatus 10 previously discussed. The components include a memory or data storage component 31. The memory 31 could be used for energy management of one or more circuits 12 connected to the controller 16. For example, the memory 31 could be used for storing energy consumption for one or more circuits 12 connected to the controller 16. The energy consumption could be obtained by a user via a communication interface 39, such as, for example, an LAN connection to a personal computer (PC) 41. The communication interface 39 can be determined by one of ordinary skill in the art and could also be, for example, a telecommunications interface. The PC could be configured, for example with application specific software with a graphical user interface (not shown)

Returning to the discussion of energy management, load shedding could be included in the features of the controller 16 such that one or more of the circuits 12 could be disconnected, using circuit breaker(s) 20, at various predetermined times. For example, in a residential environment, a circuit 12 providing electric energy to lighting of a basement could be disconnected at a time during which the basement is forecasted to not be in use. This forecast time could be a typical bedtime for a family, for example 10pm. Or, for example, the forecast time could be during working and/or school hours, when the residence is unoccupied. A timer 37 could be used in addition to the controller 16, or other timing apparatus or methods could be used, as determined by one of ordinary skill in the art. The apparatus could also be similarly used in a commercial environment.

Energy management could also be used advantageously with vacation homes, pool or hot tub heating. Energy management techniques can be included in the apparatus 10 in configurations determined by one of ordinary skill in the art. Hardware and/or software can be included in such determinations.

In the apparatus 10 of the present invention, the determination of fault condition is made by the controller 16. The fault currents include, as previously discussed, arc fault, ground fault, over current trip and instantaneous trip. Fault current determination is typically made, in residential applications, through the use of current magnitudes such as, those made standard by UL or NEC. These standards are often updated (i.e. yearly), which means that the current magnitudes for fault current determination change when a standard is updated. Municipalities typically adopt a standard of a certain year, which new construction or even residential remodeling must adhere under the municipalities building codes. These standards changes can present difficulties since, as is the case with prior art electrical service wiring, the only way to update a circuit breaker to a new standard is via replacement. However, with the apparatus of the present invention, the controller 16 can be reprogrammed or even replaced such that the data therein conforms to the presently effective building code. This is an important feature and advantage of the present invention since the update can be done easily, quickly and thus less expensively.

The programming of the controller 16 can be done by one of ordinary skill in the art. And the updating or swapping out of the controller 16 can be done by a trained technician or electrician as may be required by municipal building code. Programs can be designed to determine various fault currents. Those programs can be loaded onto controller 16 via a communications interface. The controller can be updated in situ, or can be updated at the manufacturer and provided to a technician for swapping with an controller comprising outdated fault current settings.

The controller 16 configured to determine the occurrence of various fault currents or undesirable current magnitudes including 1) arcing faults (series and parallel); 2) ground faults; 3) over currents; and 4) instantaneous currents.

In the case of the arc fault, it can be detected using the controller 16 or a properly configured circuit interrupter. So, if the properly configured circuit interrupter is installed in the panel a secondary means of fault arcing fault current protection is available during a period when the controiller 16 is being upgraded via replacement or software installation.

Referring to the drawings and in particular to FIG. 7, an exemplary embodiment of an arc fault current interrupter (AFCI) 10 includes the controller 16 having a series and parallel arc detection methods (not shown) resident thereon. Such arc detection method can be determined by one of ordinary skill in the art. In addition to the arc detection method of the controller 16, the circuit breaker 20, if configured with an appropriate switch 23 can also operate independently of the controller under arc fault conditions.

A method (not shown) uses a mathematical approach to series arc detection. The method processes one or more signal features that can identify characteristics of the signal. In addition to being activated by the mathematical method, trip mechanism 26 can also be actuated by a conventional thermal-magnetic over current device having a bimetal connected in series with line 12 conductor. The AFCI feature of circuit breaker 20 is configured to place a load 12 in electrical communication with a neutral conductor (not shown) and the line conductor 12 across a branch circuit (not shown). The AFCI feature of circuit breaker 20, also detects series arcing in branch circuit (not shown) and to interrupt power to the branch circuit.

In a similar fashion, the controller can detect ground fault conditions by use of an appropriate method that can be determined by one of ordinary skill in the art. And the circuit breaker 20, if configured with an appropriate switch, can also operate independently of the controller under arc fault conditions.

The determination of various conditions such as arc current, ground current, instantaneous trip and over current trip can be determined by one of ordinary skill in the art, for example, by providing controller 16 with appropriate instructions or methods.

The exemplary electronic control circuits of the present invention include components such as a microprocessor controller 16. In an alternate embodiment of the present invention a different microprocessor controller chip may be used. Yet in another embodiment of the present invention an ASIC application specific integrated circuit (ASIC). The type of microprocessor used in the control circuit could be determined by one of ordinary skill in the art. Furthermore, software running on a personal computer may be used with the present invention in place of the controller with the appropriate signals from the circuit breaker 20 provided to the personal computer. One of ordinary skill in the art could determine an appropriate microprocessor for the present invention.

There are advantages of the embodiments of the present invention. The invention provides advantages such as accomplishing easy setting or code updates with minimal changes to the apparatus. Also, the present invention provides a cost saving design with respect to future upgrades.

In addition to the accomplishment discussed above, the exemplary embodiments of the present invention accomplish circuit interruption through the use of a replaceable or programmable controller that can be easily upgraded. The controller configuration allows the apparatus of the present invention to be less expensive to upgrade, easier to upgrade, quicker to upgrade and more flexible than previous circuit interrupting apparatus.

It should also be noted that the terms "first", "second", "third", "upper", "lower", and the like may be used herein to modify various elements. These modifiers do not imply a spatial, sequential, or hierarchical order to the modified elements unless specifically stated.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Aspects of the present invention are defined in the following numbered clauses:
1. A circuit interrupter for interrupting the flow of current in a circuit comprising:
   a controller for determining the presence of at least one predetermined current in the circuit, the at least one predetermined current stored in the controller;
   a circuit breaker comprising a trip mechanism for receiving a trip signal, a current sensor for providing an output proportional to a current in the circuit, a switch for interrupting the flow of current in the circuit, a control input for receipt of a operating signal, and proximate and distal circuit connectors connecting the circuit breaker to a power source and the circuit, respectively;
   wherein the at least one circuit breaker connected at a first connection to the controller provides output proportional to the current in the circuit; the at least one circuit breaker connected at a second connection to obtain the operating signal from the controller; and the at a third and fourth connection wherein the at least one circuit breaker connected to the power source at the third connector proximate the power source and connected to the circuit at the fourth connector distal to the power source.
2. The circuit interrupter of clause1 wherein the controller is replaceable by a user and replaced with a replacement controller wherein the replacement controller comprises at least one predetermined current.
3. The circuit interrupter of clause 1 wherein the replacement controller is provided while the circuit interrupter is connected to the power source.
4. The circuit interrupter of clause 1 wherein the at least one predetermined current in the controller is updatable by a user.
5. The circuit interrupter of clause 1 wherein the controller is removable while the at least one circuit breaker is connected to the power source.
6. The circuit interrupter of clause 1 wherein the circuit breaker further comprises an analog to digital converter and a processor for processing a digital output of the analog to digital converter, and a communications device for receiving the digital signal processed by the processor and providing the digital signal to the controller 16.
7. The circuit interrupter of clause 1 wherein the output proportional to the circuit is provided to the controller at least one circuit breaker is connected at a first connection to the controller to provide the output proportional to the current in the circuit and wherein the circuit breaker provides a signal to the controller via the analog to digital converter connected to the processor connected to the communications device and to the controller.
8. The circuit interrupter of clause 6 wherein the at least one circuit breaker is connected at a second connection to obtain the operating signal from the controller and wherein the controller provides the operating signal to the processor which sends the operating signal to the trip mechanism.
9. The circuit interrupter of clause 1 wherein the switch for interrupting the flow of current in the circuit is a MEMS device.
10. The circuit interrupter of clause 1 wherein the switch for interrupting the flow of current in the circuit is a single-pole switch.
11. The circuit interrupter of clause 1 wherein the switch for interrupting the flow of current in the circuit is a circuit breaker.
12. The circuit interrupter of clause 1 wherein a communication device is connected to the controller via a communications interface, and wherein the communication device is used to update the at least one predetermined current in the controller.
13. The circuit interrupter of clause 12 wherein the communication device is a personal computer.
14. The circuit interrupter of clause 13 wherein the communications interface is a local area network.
15. A method of interrupting the flow of current in at least one circuit, the method comprising:
   providing a controller for determining the presence of at least one predetermined current in the at least one circuit, the at least one predetermined current stored in the controller;
   providing a circuit breaker comprising a trip mechanism for receiving a trip signal, a current sensor for providing an output proportional to a current in the at least one circuit, a switch for interrupting the flow of current in the at least one circuit, a control input for receipt of a operating signal by the trip mechanism from the controller, and proximate and distal circuit connectors connecting the circuit breaker to a power source and the at least one circuit, respectively;
   determining, by the controller, the presence of at least one predetermined current in the at least one circuit;
   receiving a trip signal at the trip mechanism of the circuit breaker from the controller, and
   interrupting the flow of current in the circuit by using a switch, when the current in the at least one circuit is determined by the controller to be a predetermined current.
16. The method of clause 15 of interrupting the flow of current in at least one circuit, the method further comprising: replacing the controller is with a replacement controller wherein the replacement controller comprises at least one predetermined current, and a user performs the replacement.
17. The method of clause 15 of interrupting the flow of current in at least one circuit, the method further comprising: replacing the controller with the replacement controller while the circuit interrupter is connected to the power source.
18. The method of clause 15 of interrupting the flow of current in at least one circuit, the method further comprising: updating the at least one predetermined current in the controller by a user.
19. The method of clause 15 of interrupting the flow of current in at least one circuit, the method further comprising: removing the controller is while the at least one circuit breaker is connected to the power source and replacing the controller with a replacement controller comprising updated predetermined currents.
20. A computer program product comprising: a program storage device readable by a circuit interrupter, tangibly embodying a program of instructions executable by the circuit interrupter to perform a method for interrupting the flow of current in at least one circuit, the method comprising:
   providing a controller for determining the presence of at least one predetermined current in the at least one circuit, the at least one predetermined current stored in the controller;
   providing a circuit breaker comprising a trip mechanism for receiving a trip signal, a current sensor for providing an output proportional to a current in the at least one circuit, a switch for interrupting the flow of current in the at least one circuit, a control input for receipt of a operating signal by the trip mechanism from the controller, and proximate and distal circuit connectors connecting the circuit breaker to a power source and the at least one circuit, respectively;
   determining, by the controller, the presence of at least one predetermined current in the at least one circuit;
   receiving a trip signal at the trip mechanism of the circuit breaker from the controller, and
   interrupting the flow of current in the circuit by using a switch, when the current in the at least one circuit is determined by the controller to be a predetermined current.
21. The method of clause 20 of interrupting the flow of current in at least one circuit, the method further comprising: replacing the controller is with a replacement controller wherein the replacement controller comprises at least one predetermined current, and a user performs the replacement.
22. The method of clause 20 of interrupting the flow of current in at least one circuit, the method further comprising: replacing the controller with the replacement controller while the circuit interrupter is connected to the power source.
23. The method of clause 20 of interrupting the flow of current in at least one circuit, the method further comprising: updating the at least one predetermined current in the controller by a user.
24. A method of clause 20 of interrupting the flow of current in at least one circuit, the method further comprising: removing the controller is while the at least one circuit breaker is connected to the power source and replacing the controller with a replacement controller comprising updated predetermined currents.

## Claims

1. A circuit interrupter for interrupting the flow of current in a circuit, the circuit interrupter comprising:
a controller (16) for determining the presence of at least one predetermined current in the circuit, the at least one predetermined current stored in the controller (16);
a circuit breaker (20) comprising a trip mechanism for receiving a trip signal, a current sensor (22) for providing an output proportional to a current in the circuit, a switch (23) for interrupting the flow of current in the circuit, a control input for receipt of a operating signal, and proximate and distal circuit connectors connecting the circuit breaker (20) to a power source (18) and the circuit, respectively;
wherein the at least one circuit breaker (20) connected at a first connection to the controller (16) provides output proportional to the current in the circuit; the at least one circuit breaker (20) connected at a second connection to obtain the operating signal from the controller (16); and the at a third and fourth connection wherein the at least one circuit breaker (20) connected to the power source (18) at the third connector proximate the power source (18) and connected to the circuit at the fourth connector distal to the power source (18).

2. The circuit interrupter of claim 1, wherein the controller (16) is replaceable by a user and replaced with a replacement controller (16) wherein the replacement controller (16) comprises at least one predetermined current.

3. The circuit interrupter of claim 1 or claim 2, wherein the replacement controller (16) is provided while the circuit interrupter is connected to the power source (18).

4. The circuit interrupter of any one of the preceding claims, wherein the at least one predetermined current in the controller (16) is updatable by a user.

5. The circuit interrupter of any one of the preceding claims, wherein the controller (16) is removable while the at least one circuit breaker (20) is connected to the power source (18).

6. The circuit interrupter of any one of the preceding claims, wherein the circuit breaker (20) further comprises an analog to digital converter (24) and a processor for processing a digital output of the analog to digital converter (24), and a communications device for receiving the digital signal processed by the processor and providing the digital signal to the controller (16).

7. A method of interrupting the flow of current in at least one circuit, the method comprising:
providing a controller (16) for determining the presence of at least one predetermined current in the at least one circuit, the at least one predetermined current stored in the controller (16);
providing a circuit breaker (20) comprising a trip mechanism for receiving a trip signal, a current sensor (22) for providing an output proportional to a current in the at least one circuit, a switch (23) for interrupting the flow of current in the at least one circuit, a control input for receipt of a operating signal by the trip mechanism from the controller (16), and proximate and distal circuit connectors connecting the circuit breaker (20) to a power source (18) and the at least one circuit, respectively;
determining, by the controller (16), the presence of at least one predetermined current in the at least one circuit;
receiving a trip signal at the trip mechanism of the circuit breaker (20) from the controller (16), and
interrupting the flow of current in the circuit by using a switch (23), when the current in the at least one circuit is determined by the controller (16) to be a predetermined current.

8. The method of claim 7, of interrupting the flow of current in at least one circuit, the method further comprising: replacing the controller (16) is with a replacement controller (16) wherein the replacement controller (16) comprises at least one predetermined current, and a user performs the replacement.

9. The method of claim 7 or claim 8, of interrupting the flow of current in at least one circuit, the method further comprising: replacing the controller (16) with the replacement controller (16) while the circuit interrupter is connected to the power source (18).

10. A computer program product comprising: a program storage device readable by a circuit interrupter, tangibly embodying a program of instructions executable by the circuit interrupter to perform a method for interrupting the flow of current in at least one circuit, the method comprising:
providing a controller (16) for determining the presence of at least one predetermined current in the at least one circuit, the at least one predetermined current stored in the controller (16);
providing a circuit breaker (20) comprising a trip mechanism for receiving a trip signal, a current sensor (22) for providing an output proportional to a current in the at least one circuit, a switch (23) for interrupting the flow of current in the at least one circuit, a control input for receipt of a operating signal by the trip mechanism from the controller (16), and proximate and distal circuit connectors connecting the circuit breaker (20) to a power source (18) and the at least one circuit, respectively;
determining, by the controller (16), the presence of at least one predetermined current in the at least one circuit;
receiving a trip signal at the trip mechanism of the circuit breaker (20) from the controller (16), and
interrupting the flow of current in the circuit by using a switch (23), when the current in the at least one circuit is determined by the controller (16) to be a predetermined current.
